# EUROPÄISCHE PATENTSCHRIFT

(11) **EP 3 721 516 B1**
(45) Veröffentlichungstag und Bekanntmachung des Hinweises auf die Patenterteilung: **12.07.2023**
(21) Anmeldenummer: 18796428.3
(22) Anmeldetag: 31.10.2018
(51) Int. Cl.: H02G 7/05, H02G 7/20, H01B 9/00

(54) **LEITERSEILÜBERBRÜCKUNGSVORRICHTUNG UND VERWENDUNG IN EINEM UMRÜST- ODER HERSTELLUNGSVERFAHREN FÜR FREILEITUNGSMASTEN**
OVERHEAD LINE CONDUCTOR BRIDGING DEVICE AND USE THEREOF IN A RETROFITTING OR PRODUCTION METHOD FOR ELECTRICITY PYLONS
DISPOSITIF DE PONTAGE DE CÂBLE CONDUCTEUR ET UTILISATION DANS UN PROCÉDÉ D'ADAPTATION OU DE FABRICATION POUR PYLÔNES DE LIGNES ÉLECTRIQUE AÉRIENNE

(30) Priorität: 04.12.2017 CH 14722017
(43) Veröffentlichungstag der Anmeldung: 14.10.2020
(73) Patentinhaber: AXPO Grid AG, 5401 Baden (CH)
(72) Erfinder: MEPPELINK, Jan, 59494 Soest (DE); WUNDERLIN, Toni, 4323 Wallbach (CH)
(74) Vertreter: Keller Schneider Patent- und Markenanwälte AG
(86) Internationale Anmeldenummer: PCT/EP2018/079813
(87) Internationale Veröffentlichungsnummer: WO 2019/110204

(56) Entgegenhaltungen:
- WO-A1-94/25968
- WO-A1-94/26013
- CA-A1- 2 413 933
- CA-A1- 2 413 996
- DE-B- 1 183 152
- JP-A- 2003 037 926
- JP-U- S58 100 426

## Beschreibung

### Technisches Gebiet

Die vorliegende Erfindung beschreibt eine Leiterseilüberbrückungsvorrichtung zur elektrisch isolierten Vorbeiführung eines Leiterseils einer Freileitung an einem Leiterseilausleger eines Freileitungsmastes, wobei die Leiterseilüberbrückungsvorrichtung mindestens eine Leiterschlaufe und einen Isolatorkörper aufweist, der die beidseitig jeweils an einem Ende des Leiterseils die Enden des Leiterseils elektrisch verbindende und den Leiterseilausleger überbrückend anordenbare Leiterschlaufe umschliesst. Des Weiteren betrifft die Erfindung ein Verfahren zur Umrüstung von bestehenden bzw. Herstellung von Freileitungsmasten oder Abspannmasten, umfassend die Schritte eines Bereitstellens und Befestigens einer Leiterseilüberbrückungsvorrichtung an einem Leiterseilausleger durch beidseitiges Verbinden eines Leiterseils mittels jeweils eines Verbindungsmittels an beiden Enden der Leiterschlaufe der Leiterseilüberbrückungsvorrichtung, sodass das Leiterseil elektrisch isoliert und beabstandet vom Leiterseilausleger am Leiterseilausleger vorbeigeführt ist.

### Stand der Technik

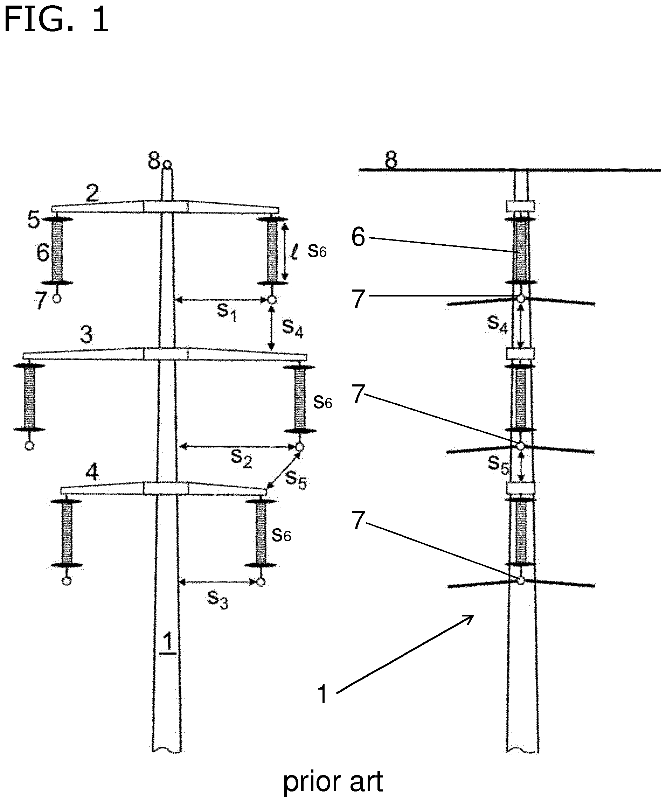

Hochspannungsfreileitungen werden an Freileitungsmasten 1 aus Stahl, Beton, Holz oder Komposit-Materialien erstellt. Als Beispiel zeigt Figur 1 einen Betonmast 1 mit drei Auslegern mit Leiterseilen 7 für eine Drehstromdoppelleitung.

Der Betonmast 1 trägt drei Leiterseilausleger 2,3,4 an denen jeweils Hochspannungsisolatoren 6 angeordnet sind, die mit den daran montierten Leiterseilen 7 eine Drehstrom-Doppelleitung bilden. Die Leiterseile 7 sind isolatorfrei ausgeführt, weshalb entsprechende Isolatoraufbauten im Bereich der Freileitungsmasten 1 bzw. der Leiterseilausleger 2, 3, 4 zum Schutz vor Überschlägen und Kurzschlüssen angeordnet werden müssen. Zum Schutz gegen Blitzschlag dient ein Erdseil 8 an der Spitze des Freileitungsmasten 1.

Hochspanungsisolatoren 6 sind mit Lichtbogenschutzarmaturen 5 ausgerüstet, die eine Beschädigung der Isolatoroberfläche durch Lichtbogeneinwirkung bei Kurzschlüssen vermeidet. Für Hochspannungsisolatoren 6 kommen Kappen-Bolzen-Isolatoren oder Langstabisolatoren aus verschiedenen Materialien zum Einsatz. Als Isolatorwerkstoff werden Glas, Porzellan, Glasfaserverstärkter Kunststoff mit Silikonschirmen oder gleichwertige Werkstoffe verwendet. Jeder Hochspannungsisolator 6 weist das Fadenmass I auf. Der Kriechweg eines Isolators wird durch die für den Einsatz relevante Umweltbelastung festgelegt. Das Leiterseil 7 wird mit geeigneten Mitteln am Hochspannungsisolator 6 befestigt.

Die notwendigen Abstände der Leiterseile 7 zum Freileitungsmast 1 bzw. zwischen Leiterseil 7 und den Leiterseilauslegern 2, 3, 4 sind in Figur 1 durch die Schlagweiten s1, s2, s3, s4, s5, s6 gekennzeichnet. Die Werte der Schlagweiten s1, s2, s3, s4, s5, s6 ergeben sich aus den gesetzlichen Anforderungen und der physikalisch limitierten elektrischen Festigkeit, je nach Höhe der im Betrieb beaufschlagten Hochspannung, bis zu welcher ein elektrischer Überschlag in Form eines Lichtbogens verhindert werden soll.

Um die Stromversorgung zu sichern, ist es nötig, dass Netz immer weiter auszubauen. Es sind vom Gesetzgeber Verordnungen erlassen worden, um Menschen vor schädlicher oder lästiger nichtionisierender Strahlung zu schützen. Eine ist die Verordnung über den Schutz vor nichtionisierender Strahlung, in der Schweiz NISV genannt, welche höchste zulässige magnetische und elektrische Felder im Bereich von Freileitungsmasten 1 im Betrieb definiert. Weiter regelt in der Schweiz die Leitungsverordnung, welche technisch begründeten Mindestabstände der Leiterseile 7 vom Freileitungsmast 1 bzw. den Leiterseilauslegern 2, 3, 4 einzuhalten sind. Entsprechend ist es nicht ohne weiteres möglich, die Übertragungsspannungen auf den Leiterseilen 7 einfach zu erhöhen. Dazu sind bauliche Massnahmen am Freileitungsmast unumgänglich. Diese baulichen Massnahmen sollen Umweltschutzauflagen erfüllen, ästhetisch akzeptabel und trotzdem kostengünstig sein.

Der Wunsch ist nun, ausgehend von den neuen Anforderungen, bestehende Hochspannungsfreileitungen mit einer gegebenen Übertragungsspannung auf eine höhere Übertragungsspannung aufzurüsten, ohne jedoch das Mastbild und spezifisch den Aufhängepunkt des Leiterseils wesentlich zu verändern. Dieses Vorgehen erfordert die kritische Prüfung aller erforderlichen Abmessungen.

Eine Aufrüstung erfordert in erster Linie längere Hochspannungsisolatoren 6 als bisher, mit einem grösseren Fadenmass. Bei unveränderter Geometrie des Freileitungsmastes 1 mit gegebenen Auslegern 2, 3, 4 sind dann die Schlagweiten s4 und s5 zu gering, so dass eine Modifikation des Freileitungsmastes 1 durch Anordnung neuer Ausleger erforderlich wird. Die Abstände s1, s2, s3 müssen die gesetzlichen Anforderungen ebenfalls erfüllen, sodass in der Praxis bisher zwangsläufig verbreiterte Ausleger 2, 3, 4 benötigt werden.

Bevorzugt wäre eine Lösung, bei welcher auf eine Verlängerung des Freileitungsmasten 1 und/oder eine Veränderung der Leiterseilausleger 2, 3, 4, bezüglich Länge und Position verzichtet werden kann, wobei die Abstände des Leiterseils 7 den gültigen Gesetzen und Verordnungen genügen.

Beispielsweise betrifft WO 94/25968 A1 einen Hochspannungsleiter, der bei Berührung mit einem anderen Leiter gegen Funkenüberschlag bei Wechsel- und Gleichspannungsstromfreileitungen für Spannungen von ca. 60 kV und höher gegen Funkenüberschlag geschützt ist. Der Leiter ist mit einer Isolierung überzogen, wobei eine Isolatorbeschichtung auf dem Leiter eine den Leiter umhüllende halbleitende Schicht, eine äusserste wetterfeste Oberflächenisolationsschicht und eine eigentliche Isolationsschicht dazwischen umfasst.

DE 11 83 152 B betrifft eine Schirmringanordnung zur Ausrüstung von teilisolierten Hochspannungsfreileitungen oder Freiluftschaltanlagen zur Verbesserung der Feldverhältnisse zwischen dem Aufhängepunkt eines Hängeisolators am Freileitungsmast und dem spannungführenden isolierten Freileitungsteil. Die Schirmringe sind so isoliert ausgebildet, dass die Isolation des am spannungsführenden Seil liegenden Ringes fugenlos in die Isolation des Leiterseiles übergeht und dass die Befestigung des auf Erdpotential liegenden gleichfalls isolierten Schirmrings an der Aufhängeöse zur Verhinderung des Vorwachsens des Erdpotentials von der blanken Öse auf die Oberfläche der Isolierung des Schirmrings gleichfalls isoliert ist.

CA 2 413 996 A1 betrifft ein Aufhängungssystem für Freileitungen zur Verwendung bei der Übertragung von Hochspannungselektrizität, mit einem Turm, Dehnungs-Isolator-String-Baugruppen und vollisoliertem Kabel mit elektrisch leitfähigem Kern. Blanke Leiter der Stromleitung sind an gegenüberliegenden Seiten des Turms durch Dehnungsisolator-Stringanordnungen am Turm befestigt, die eine ausreichende Länge aufweisen, um elektrischen Ladungsüberschlag von den blanken Leitern zum Turm zu vermeiden.

### Darstellung der Erfindung

Die vorliegende Erfindung hat sich zur Aufgabe gestellt eine Möglichkeit zu schaffen, Freileitungen mit erhöhten elektrischen Spannungen zu beaufschlagen, ohne dass eine Masterhöhung oder eine Veränderung des Mastbildes nötig wird.

Diese Aufgabe wird mit der hier vorgestellten Leiterseil überbrückungsvorrichtung und einem Verfahren zur Umrüstung von bestehenden bzw. Herstellung von Freileitungsmasten oder Abspannmasten gelöst, wobei eine vergleichsweise kostengünstige und einfache Lösung geschaffen ist.

Bei einer erfindungsgemässen Leiterseilüberbrückungsvorrichtung wird die Aufgabe dadurch gelöst, dass der Isolatorkörper mehrlagig ist, mindestens eine direkt auf der Oberfläche der Leiterschlaufe aufliegende Leitschicht, eine die Leitschicht umschliessende Isolationsschicht und einen die Isolationsschicht umschliessenden Schutzmantel umfasst, und dass die Leiterseilüberbrückungsvorrichtung mindestens zwei Steuerringe umfasst, welche an beiden Enden der Leiterseilüberbrückungsvorrichtung elektrisch leitend mit der Leiterschlaufe verbunden anordenbar sind. In einem erfindungsgemässen Verfahren wird die Aufgabe dadurch gelöst, dass eine erfindungsgemässe Leiterseilüberbrückungsvorrichtung verwendet wird.

Nach Umrüstung oder Herstellung der Freileitungsmasten ist es möglich, die beaufschlagte elektrische Spannung deutlich zu erhöhen.

Weitere Ausführungsformen der Erfindung sind in den abhängigen Ansprüchen beschrieben.

### Kurze Beschreibung der Zeichnungen

Der Erfindungsgegenstand wird nachstehend im Zusammenhang mit den anliegenden Zeichnungen beschrieben.
- Figur 1: zeigt eine Aufsicht und eine Seitenansicht eines Freileitungsmasten gemäss Stand der Technik, hier als typischer Tonnenmast mit einer Doppelleitung und vertikalen Hochspannungsisolatoren.
- Figur 2a): zeigt eine Aufsicht auf einen Freileitungsmast mit einem erfindungsgemäss mehrlagigen Isolationskörper für eine Leiterseilüberbrückungsvorrichtung, während
- Figur 2b): eine Aufsicht auf einen Freileitungsmast mit einer gebogenen Leiterschlaufe mit gebogenem erfindungsgemäss mehrlagigen Isolatorkörper, während
- Figur 2c): eine Aufsicht auf einen Freileitungsmasten mit einer gradlinigen Leiterschlaufe mit einem gradlinigen erfindungsgemäss mehrlagigen Isolatorkörper zeigt.
- Figur 3a): zeigt einen Querschnitt durch einen erfindungsgemäss mehrlagigen Isolatorkörper, wobei der Einfachheit halber die gradlinige Variante gezeigt ist, während
- Figur 3b): einen Querschnitt durch einen erfindungsgemäss mehrlagigen Isolatorkörper gemäss Figur 3a) mit Endkappen versehen zeigt.
- Figur 4a): zeigt eine Aufsicht auf einen Freileitungsmast mit einer erfindungsgemässen weiteren Ausführungsform eines Isolatorkörpers, während
- Figur 4b): eine Seitenansicht des Freileitungsmastens gemäss Figur 4a) zeigt.
- Figur 5a): zeigt eine Schnittdarstellung eines nicht erfindungsgemässen und lediglich der Veranschaulichung dienenden Isolatorkörpers, welcher rohrförmig mit konzentrisch verlaufendem Leiterseil ausgestaltet ist, während
- Figur 5b): eine Schnittansicht einer Kombination zweier Isolatorkörper zeigt, die einen erfindungsgemäss mehrlagigen Isolatorkörper umfasst.
- Figur 6a): zeigt eine teilweise schematisch ausgeführte Ansicht einer gekürzt dargestellten erfindungsgemässen Leiterseilüberbrückungsvorrichtung, die einen erfindungsgemäss mehrlagigen Isolatorkörper und erfindungsgemäss angeordnete Steuerringe umfasst, wobei in
- Figur 6b): eine Detailansicht eines Endes der Leiterseilüberbrückungsvorrichtung gemäss Figur 6a) gezeigt ist.

### Beschreibung

Am Beispiel eines Freileitungsmasten 1 in Form eines typischen Tonnenmasten, sind hier Möglichkeiten gezeigt und im Folgenden beschrieben, um nicht isolierte üblicherweise verwendete Leiterseile 7 zwischen bestehenden Freileitungsmasten 1 bzw. bestehenden Leiterseilauslegern 2, 3, 4 mit erhöhter elektrischer Spannung zu beaufschlagen. Während die beschriebene Vorrichtung vor allem eine Erhöhung von heute 50kV auf zukünftig 110kV ohne Änderung des Mastbildes erlaubt und probiert wurde, ist bei entsprechender Auslegung auch eine Erhöhung auf 200kV und mehr möglich. Dabei werden alle gesetzlichen bzw. durch Verordnungen definierten Abstände s1, s2, s3, s4, s5 zwischen den Leiterseilen 14 eingehalten.

Für die Umrüstung bestehender Freileitungsmasten 1 bzw. die Herstellung von Freileitungsmasten 1 wird eine Leiterseilüberbrückungsvorrichtung L vorgeschlagen, welche jedes Leiterseil 7 im Bereich des Leiterseilauslegers 2, 3, 4 zweiseitig aufnimmt. Der Betonmast 1 trägt drei Leiterseilausleger 2, 3, 4 die mit jeweils einer Leiterseilüberbrückungsvorrichtung L und den daran montierten Leiterseilen 7 eine Drehstrom-Doppelleitung bilden. Zum Schutz gegen Blitzschlag dient hier auch ein Erdseil 8 auf dem Mast.

Die Leiterseilüberbrückungsvorrichtung L umfasst hier in einer Ausführungsform: einen zentralen Hochspannungsisolator 10, zwei beidseitig an einem Verbindungsstück 12 angeordnete Seitenisolatoren 11, 11', zwei Umlenk- und Befestigungsmittel 13 eine Leiterschlaufe 15 und einen Isolatorkörper 16, 16', 16".

Der zentrale Hochspannungsisolator 10 ist hier vertikal hängend einseitig am Leiterseilausleger 2, 3, 4 befestigt und ist auf der anderen Seite am Verbindungsstück 12 befestigt. Die beiden Seitenisolatoren 11, 11' sind jeweils an zwei gegenüberliegenden Seiten des Verbindungsstückes 12, beabstandet vom zentralen Hochspannungsisolator 10 und zur vertikalen Richtung geneigt angeordnet, wodurch eine y-form aus zentralem Hochspannungsisolator 10 und den beiden Seitenisolatoren 11, 11' gebildet wird, welche hier ein auf dem Kopf stehendes Y darstellt.

Diese y-förmige Gestaltung des zentralen Hochspannungsisolators 10 und dem Verbindungsstück 12, von welchem die Seitenisolatoren 11, 11' beidseitig wegragen, wodurch ein Y gebildet wird, wird genutzt, damit die statische Belastung des vormals einstückig am Leiterseilausleger vorbeigeführten Leiterseils 7 nachempfunden ist. Somit ändert sich an der Statik an jedem Leiterseilausleger mit angeordneter Leiterseilüberbrückungsvorrichtung L nichts.

Hier ist noch ein Verbindungsmittel 14, 14' beidseitig zwischen Leiterseil 7 und Leiterseilüberbrückungsvorrichtung L angeordnet.

Der Isolatorkörper 16, 16', 16" umgibt die Leiterschlaufe 15 entlang einer Länge l3 und zwei Enden eines Leiterseils 7 sind an den Umlenk- und Befestigungsmitteln 13 befestigt, wobei die Zugkräfte über die Umlenk- und Befestigungsmittel 13 und hier über die Seitenisolatoren 11, 11' und das Verbindungsstück 12 aufgenommen werden.

Da hier Lichtbogenschutzarmaturen 5 an den Isolatoren 10, 11, 11' angeordnet sind, ist das Verbindungsstück 12 hier im elektrischen Feldschatten der Lichtbogenschutzarmaturen 5 angeordnet.

Die Verbindung der Seitenisolatoren 11, 11' zum Leiterseil 7 der Hochspannungsfreileitung erfolgt beidseitig über als Schraubverbindung oder Pressverbindung ausgeführte Umlenk- und Befestigungsmittel 13. Das hochspannungführende nicht isolierte Leiterseil 7 wird entsprechend über die Umlenk- und Befestigungsmittel 13 mit den Seitenisolatoren 11, 11' verbunden.

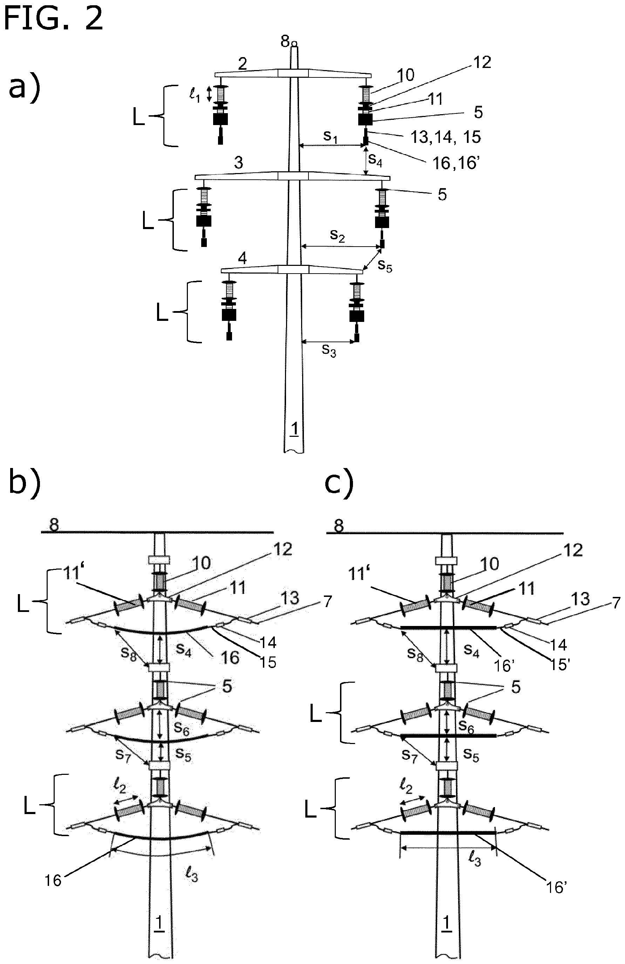

Zwischen den Umlenk- und Befestigungsmitteln 13 ist die Leiterschlaufe 15 beidseitig, die beiden Enden des Leiterseils 7 elektrisch leitend verbindend und die Isolatoren 10, 11, 11' und das Verbindungsstück 12 überbrückend, hängend angeordnet. Während die Leiterschlaufe 15 gemäss Ausführungsform der Figur 2b) gebogen ausgeführt ist, verläuft die Leiterschlaufe 15' gemäss Figur 2c) gradlinig.

Die Leiterschlaufe 15, 15' verbindet die beiden Anschlüsse des Leiterseils 7. Die Leiterschlaufe 15, 15' ist über eine weitere Schraubverbindung oder Pressverbindung als Verbindungsmittel 14, 14' mit den Umlenk- und Befestigungsmitteln 13 verbunden.

Der Isolatorkörper 16, 16', 16" ist über die Länge 13, die Leiterschlaufe 15 umschliessend fest an der Leiterschlaufe 15 angeordnet. Der Isolatorkörper 16, 16', 16" schirmt die Hochspannung entlang der Leiterschlaufe 15 ab, sodass die Abstände s4 bzw. s5 aufgrund der Isolation in einem viel kleineren Abstand zu dem darunterliegenden Leiterseilausleger 3, 4 angeordnet werden. Dadurch wird es möglich, bestehende Freileitungen auf eine höhere Spannungsebene anzuheben, ohne die Geometrie des Mastbildes zu verändern. Andererseits kann eine geplante neue Hochspannungsfreileitung mit kleineren Abmessungen ausgelegt werden. Lediglich die Schlagweiten s7 bzw. s8 sind konventionell auszulegen. Der Abstand s6 zwischen Verbindungsstück 12 und Leiterschlaufe 15 ist unkritisch da die Leiterschlaufe 15 mittels Isolatorkörper 16, 16', 16" elektrisch isoliert ist.

Das Kernstück der Leiterseilüberbrückungsvorrichtung L ist der Isolatorkörper 16, 16', 16" welcher die hochspannungführende Leiterschlaufe 15, 15' isoliert und beidseitig an einem Leiterseil 7, das Leiterseil 7 zwischen zwei Umlenk- und Befestigungsmitteln 13 gehalten, überbrückend befestigt ist.

Der Isolatorkörper 16, 16', 16" ist rohrförmig bzw. schlauchförmig ausgeführt, weist eine Länge l3 auf, welche kleiner als die Länge der Leiterschlaufe 15, 15' ist. Dabei umgibt der Isolatorkörper 16, 16', 16" die Leiterschlaufe 15, 15' entlang ihres Umfangs und der Länge 13. Der Isolatorkörper 16, 16', 16" ist aus einem Material bzw. aus Schichten oder Lagen hergestellt. Hier im Detail gezeigt wird ein mehrlagig ausgeführter Isolatorkörper 16, 16', 16", umfassend unterschiedliche Materialien.

Die Leiterschlaufe 15 selbst besteht aus einem elektrischen Leiter, der insbesondere aus Aluminium, Kupfer, deren Legierungen wie Aldrey oder anderen aus der Herstellung von Freileitungen bekannten Materialien bestehen kann. Je nach Ausgestaltung der Leiterschlaufe 15 kann die Leiterschlaufe 15 und der sie umgebende Isolatorkörper 16, 16', 16" gradlinig oder gebogen ausgeführt sein. Je nach benutzen Isolatorkörper 16, 16', 16" kann die gradlinige Ausgestaltung einfacher hergestellt werden.

Der Isolatorkörper 16, 16' umfasst eine innere Leitschicht 18, eine Isolationsschicht 19 und einen äusseren Schutzmantel 20, welche die Leiterschlaufe 15, 15' entlang der Länge l3 umgeben.

Die innere Leitschicht 18 liegt direkt auf der Oberfläche der Leiterschlaufe 15, 15' auf und umgibt die Oberfläche der Leiterschlaufe 15, 15' vollständig,um Unebenheiten auf der Oberfläche der Leiterschlaufe 15, 15' auszugleichen, so dass keine lokalen Feldstärkeerhöhungen auftreten. Die innere Leitschicht 18 kann aus unterschiedlichen schwach leitenden Kunststoffen hergestellt sein und weist eine Schichtdicke von 0,1 bis 2 Millimetern auf.

Leitschichten sind schwach leitende Kunststoffe und weisen einen spezifischen Gleichstromwiderstand von 25 bis 100 Ohmcm bei 23 Grad Celsius und von 50 bis 1000 Ohmcm bei 90 Grad Celsius auf. Im Fachjargon wird die innere Leitschicht 18 auch Halbleiter genannt, obwohl diese kein Halbleiter mit Bandlücke im elektronischen Sinn ist.

Auf diese innere Leitschicht 18 ist die Isolationsschicht 19 in Form eines Isolierstoffes, insbesondere aus vernetztem Polyethylen oder einem anderen hochspannungsfesten Kunststoff beispielsweise einem Duroplast aufgebracht. Die Isolationsschicht 19 kann aus beliebigen Isolatorstoffen wie aus Glas oder einem isolierenden Metalloxid hergestellt sein. Zum Schutz gegen die Wirkung ultravioletter Sonnenstrahlung dient der aufgebrachte Schutzmantel 20, der vorzugsweise aus schwarzem Kunststoff, wie z.B. Polyethylen besteht. Bevorzugt ist der Schutzmantel 20 aus Silikon hergestellt, welches beispielsweise rot eingefärbt ist.

Generell kann der Schutzmantel 20 zur zusätzlichen Abwehr von Vögeln mit Silikonschirmen ausgeführt sein. Aus ästhetischen Gründen wie Unauffälligkeit in der Landschaft kann auch eine angepasste Farbe verwendet werden oder es kann auch ein weiterer eingefärbter Schutzmantel über dem gefärbten Schutzmantel 20 angeordnet werden. Die Dicke des Schutzmantels 20 wird durch mechanische Anforderungen festgelegt, ist mindestens 4 mal grösser als die Dicke der inneren Leiterschicht 18 bzw. beträgt insbesondere 2-4 mm.

Der Isolatorkörper 16, 16' umfasst eine Lage bzw. Isolationsschicht 19, die aus Kunststoff, Glas, Porzellan, Silikon oder einem Metalloxid hergestellt sein kann.

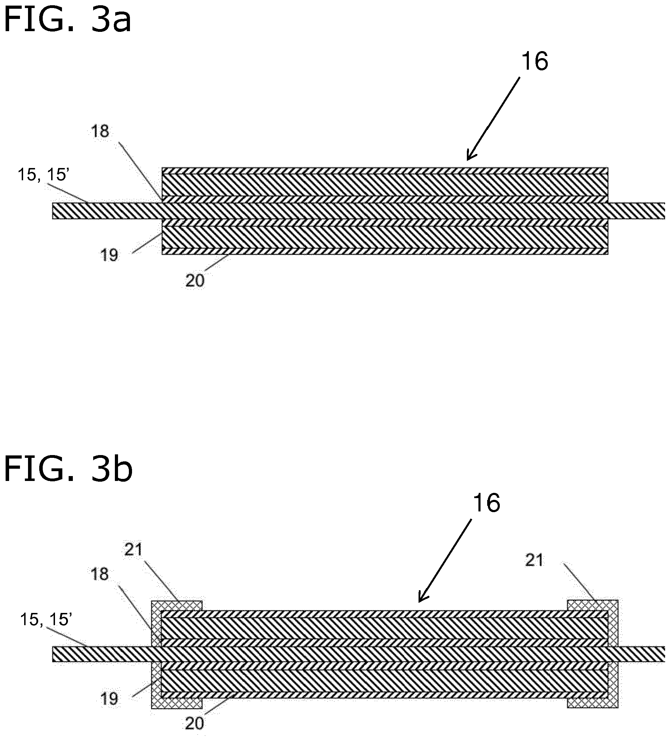

Zusätzlich können Endkappen 21 zum Schutz der Stirnflächen der Isolationsschicht 19 gegen die Sonnenstrahlung und gegen Eindringen von Wasser, wie in Figur 3b dargestellt angeordnet sein. Derartige Endkappen 21 sind bevorzugt aus einem Isolatormaterial aufgeschrumpft.

Der zentrale Hochspanungsisolator 10 weist das Fadenmass l1 und die und die Seitenisolatoren 11, 11' das Fadenmass l2 auf. Der Kriechweg eines Isolators wird durch die für den Einsatz relevante Umweltbelastung festgelegt.

Wie Versuche gezeigt haben sollte die Länge l3 des Isolatorkörpers 16, 16', bei Verwendung von Seitenisolatoren 11, 11' etwa 2 bis 4 mal grösser sein, als die Länge des Fadenmasses der Seitenisolatoren 11, 11', gemäss l₃ > 2^{∗}l₂^{∗}K; 1 ≤ K ≤ 2.

Der zentrale Hochspanungsisolator 10 und die Seitenisolatoren 11, 11' sind hier mit Lichtbogenschutzarmaturen 5 ausgerüstet, die eine Beschädigung der Isolatoroberfläche durch Lichtbogeneinwirkung bei Kurzschlüssen bzw. Erdschlüssen vermeidet. Als zentraler Hochspanungsisolator 10 und Seitenisolatoren 11, 11' kommen Kappen-Bolzen-Isolatoren oder Langstabisolatoren zum Einsatz. Als Isolatorwerkstoff werden Glas, Porzellan, Keramik, Glasfaserverstärkter Kunststoff mit Silikonschirmen oder gleichwertige Werkstoffe verwendet.

Das Verbindungsstück 12 kann als Isolator ausgebildet sein, muss aber in erster Linie die Zugkräfte aushalten. Bei Verwendung von Seitenisolatoren 11, 11' und dem zentralen Hochspannungsisolator 10 ist gewährleistet, dass keine Spannungsüberschläge auf den Leiterseilausleger 2, 3, 4 auftreten können.

Das Verbindungsstück 12 und der zentrale Hochspannungsisolator 10 können in einer weiteren Ausführungsform der Leiterseilüberbrückungsvorrichtung Lein Bauteil bilden, wobei dabei die Enden des Leiterseils 7 mittels der Umlenk- und Befestigungsmittel 13 direkt unter Weglassung von Seitenisolatoren 11, 11', am kombinierten Bauteil befestigt sind.

Als Umlenk- und Befestigungsmittel 13 können schellenartige oder bridenartige Vorrichtungen verwendet werden, welche an einer Seite mit dem Ende des Leiterseils 7 und an der gegenüberliegenden Seite direkt mit der Leiterschlaufe 15, 15' oder mit dem Verbindungsmittel 14 und direkt mit dem Verbindungsstück 12 oder einem Seitenisolator 11, 11' verbunden werden. Die Umlenk- und Befestigungsmittel 13 nehmen die Zugspannung des Leiterseils 7 auf und leiten diese über das Verbindungsstück 12 zum Leiterseilausleger 2, 3, 4.

Die notwendigen Abstände des Leiterseils 7 zum Freileitungsmast sind in den Figuren 2 durch die Schlagweiten s1, s2, s3, s4, s5, s6, s7, s8 gekennzeichnet. Diese Schlagweiten ergeben sich aus den gesetzlichen Anforderungen und der physikalisch limitierten elektrischen Festigkeit und genügen bei Verwendung der Leiterseilüberbrückungsvorrichtung L den Anforderungen.

Die hier vorgestellte Methode der Einbringung einer Leiterseilüberbrückungsvorrichtung L kann an Freileitungsmasten 1 oder in angepasster Form grundsätzlich auch für Abspannmasten verwenden werden.

In einer weiteren Ausführungsform kann der Isolatorkörper 16, 16', 16" derart ausgeführt sein, dass sich der Durchmesser an den Enden des Isolatorkörpers 16, 16', 16" beidseitig verjüngt. Zusätzlich könnten auch hier abgewandelte Endkappen 21 angebracht werden.

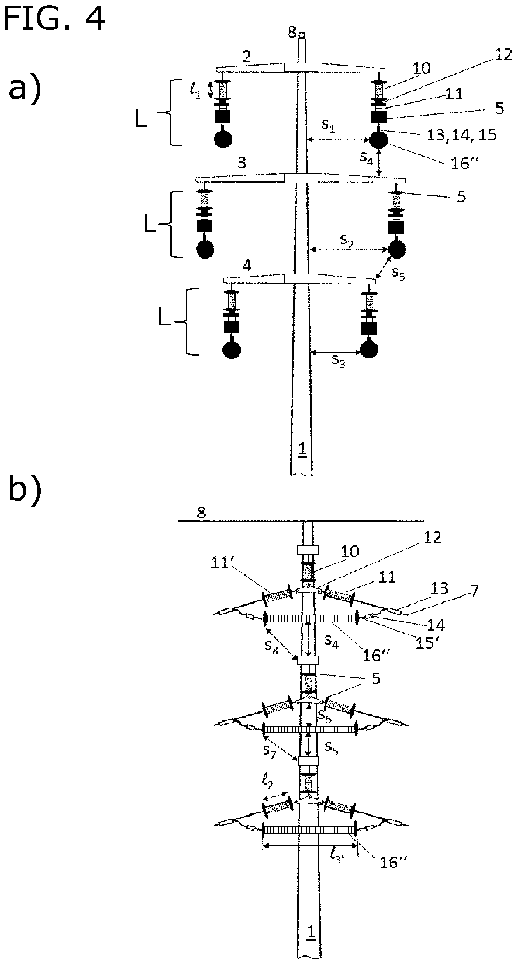

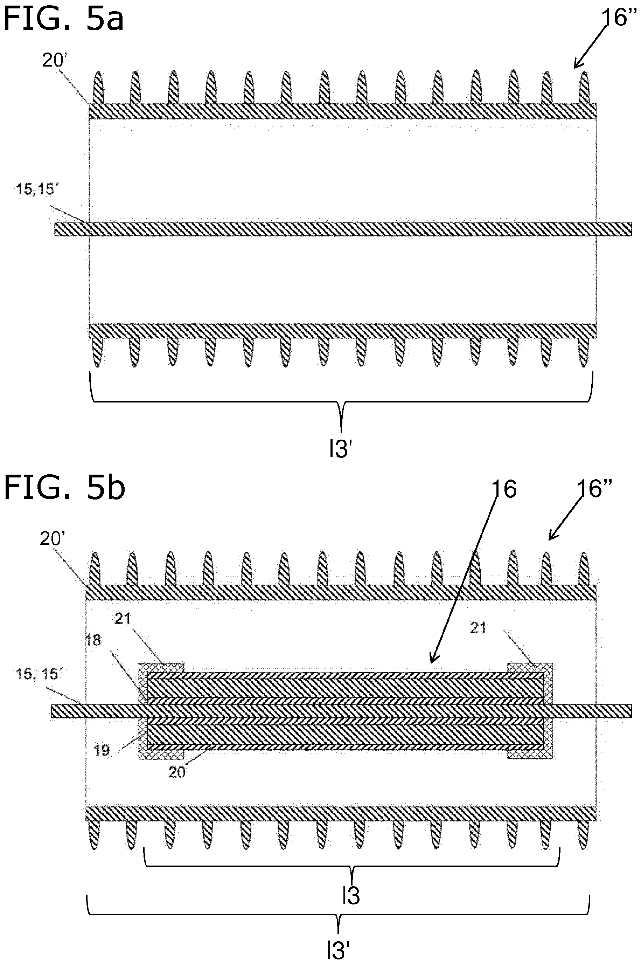

Wie Versuche gezeigt haben, kann die Leiterseilüberbrückungsvorrichtung L auch mit einem abgewandelten Isolatorkörper 16" wie im Folgenden anhand der Figuren 4 und 5 beschrieben ausgestaltet sein. Die Leiterseilüberbrückungsvorrichtung L ist dabei wie bereits oben beschrieben am Leiterseil 15' angeordnet und führt damit die Hochspannung am Leiterseilausleger 2, 3, 4 des Freileitungsmasten 1 beabstandet vorbei. Der Isolatorkörper 16" ist hier rohrförmig ausgeführt durch welches konzentrisch das Leiterseil 15' geführt ist. Der Isolatorkörper 16" bildet einen Hohlkörper, welcher die Leiterschlaufe 15' vollständig entlang der Länge l3' umschliesst.

Eine Detailansicht ist in Figur 5a gezeigt, wobei der nicht erfindungsgemässe und lediglich der Veranschaulichung dienende Isolatorkörper 16" von einem Schutzmantel 20' gebildet wird. Die Wandstärke des Schutzmantels 20' bzw. des Isolatorkörpers 16" muss entsprechend gewählt werden, sodass eine für die beaufschlagten Hochspannungen erforderliche elektrische Festigkeit erreicht wird. Das Material des Schutzmantels 20' des Isolatorkörpers 16" bzw. insbesondere dessen nach aussen gewandte Oberfläche des sollte aus einem lichtbogenresistenten Material hergestellt sein, beispielsweise aus Porzellan, mit Einschränkungen auch aus Silikon oder einem Kunststoff. Hier sind an der Oberfläche des Schutzmantels 20' des Isolatorkörpers 16" Schirme angeordnet, welche den Kriechweg erhöhen und bei Regen einen durchgehenden Wasserfilm auf der Oberfläche des Isolatorkörpers 16" verhindern.

Der nicht erfindungsgemässe und lediglich der Veranschaulichung dienende Isolatorkörper 16" kann mit in Figur 5a nicht gezeigten Endkappen versehen sein, welche für die beanstandete Befestigung und Führung des Leiterseils 15' sorgen. Bevorzugt ist das Innere des Isolatorkörpers 16" bzw. der Raum zwischen Leiterschlaufe 15, 15' und der Innenfläche des Isolatorkörpers 16" mit einem Gas, Öl oder Polyurethanschaum gefüllt, was hier nicht dargestellt ist.

In Figur 5b ist eine weitere Leiterseilüberbrückungsvorrichtung L gezeigt, welche einen erfindungsgemäss mehrlagig ausgeführten inneren Isolatorkörper 16 umfasst, welcher die Leiterschlaufe 15 entlang einer Länge l3 umgibt und wie gemäss Beschreibung der Figuren 3a oder 3b erläutert ausgeführt ist. Hier weist der erste Isolatorkörper 16 Endkappen 21 auf und die Leiterschlaufe 15, 15' ist konzentrisch durch den Isolatorkörper 16 geführt. Ein zweiter Isolatorkörper 16' mit Schutzmantel 20' mit einem grösseren Durchmesser umschliesst entlang einer Länge l3' den ersten Isolatorkörper 16 und die Leiterschlaufe 15, 15' vollständig, dabei ist die Länge l3' hier grösser als die Länge l3 gewählt. Bevorzugt liegt der erste Isolatorkörper 16 und die Leiterschlaufe 15, 15' konzentrisch im zweiten Isolatorkörper 16" verlaufend.

Die Ausführungen des Isolatorkörpers 16" gemäss Figuren 5a und b verhindern Überschläge über die Oberfläche des Isolatorkörpers 16" zuverlässiger. Im Netzbetrieb würde dabei der Kurzschlussstrom fliessen, der durch die Kurzunterbrechung abgeschaltet würde, was verhindert werden soll. Derartige Kurzschlussström erzeugen einen Lichtbogen dessen thermische Wirkung die Oberfläche des Isolatorkörpers beschädigen kann.

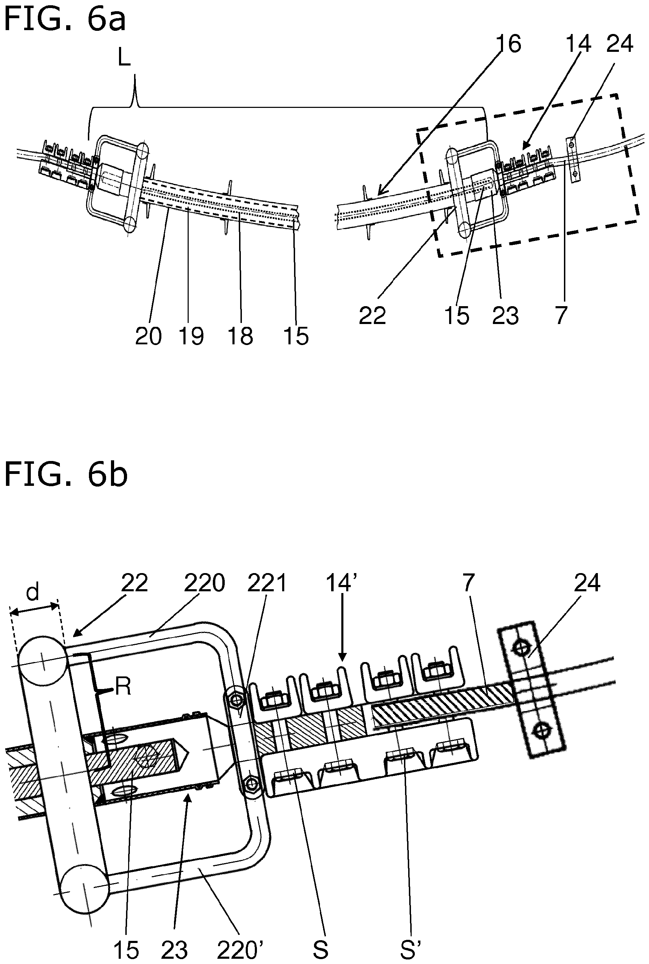

Versuche haben gezeigt, dass die elektrisch leitende Verbindung zwischen Leiterseil 7 und Leiterschlaufe 15 der Leiterseilüberbrückungsvorrichtung L ausreichend stabil, überschlagsfrei und wartungsfreundlich ausgeführt sein muss. Eine geeignete Weiterbildung der Leiterseilüberbrückungsvorrichtung L ist in Figur 6a und der Detailansicht 6b dargestellt. Dabei sind die grundlegenden Bestandteile der Leiterseilüberbrückungsvorrichtung L, die Leiterschlaufe 15, 15', der Isolatorkörper 16, 16', 16", die Leitschicht 18, die Isolationsschicht 19 und der Schutzmantel 20, wie bereits oben beschrieben gleichbehalten worden.

An den zum Leiterseil 7 weisenden Enden der Leiterseilüberbrückungsvorrichtung L ist hier jeweils ein Bolzen 23 als Abschluss der Leiterseilüberbrückungsvorrichtung L angeordnet. Entsprechend stellt der Bolzen 23 einen Teil der Leiterseilüberbrückungsvorrichtung L dar. Der Bolzen 23 ist metallisch und teilweise hohl ausgestaltet und elektrisch leitend mit der Seele der Leiterseilüberbrückungsvorrichtung L, also der Leiterschlaufe 15 verbunden. Hier ist die Leiterschlaufe 15 zugfest in dem Bolzen 23 festgeschraubt, wobei auch eine zugfeste Pressverbindung möglich ist.

Zur Verbindung der Leiterseilüberbrückungsvorrichtung L mit dem Leiterseil 7 ist das Verbindungsmittel 14 als Klemme 14' ausgebildet, wobei die Klemme 14' in dieser Ausführungsform einen Teil der Leiterseilüberbrückungsvorrichtung L bildet.

Ein Teil des Bolzens 23 ist in einer ersten Aufnahme in der Klemme 14' befestigt, während ein Ende des unisolierten Leiterseils 7 in einer zweiten Aufnahme in der Klemme 14' befestigt ist. Bevorzugt werden Bolzen 23 und Leiterseil 7 in der Klemme 14' bzw. den zugehörigen Aufnahmen festgeschraubt. Entsprechend sind Schraubverbindungen S, S' in Figur 6b dargestellt. Um Stabilität und ausreichende elektrische Leitfähigkeit zu erreichen ist die Klemme 14' metallisch ausgeführt. Der Bolzen 23 kann in einer anderen Ausführungsform auch direkt mit dem Ende des Leiterseils 7 verbunden sein und der Bolzen einseitig in der Klemme 14' befestigt werden, während auf der anderen Seite der Klemme 14' die Seele der Leiterschlaufe 15 eingeschraubt ist.

Als vorteilhaft hat sich erwiesen, wenn an jedem der beiden Enden der Leiterseilüberbrückungsvorrichtung L jeweils mindestens ein Steuerring 22 angeordnet ist, wodurch Koronaentladungen verhindert werden. Da die an den Enden auftretenden elektrischen Feldstärken aufgrund der Nähe des hochspannungführenden Leiterseils 7 zur Leiterschlaufe 15 sehr hoch sind, sind Steuerringe 22 notwendig, um Koronaentladungen bei Spannungen grösser 200kV zu verhindern. Der Steuerring 22 bildet ebenfalls einen Teil der Leiterseilüberbrückungsvorrichtung L.

Jeder Steuerring 22 wird von mindestens einem Arm 220, 220' gehalten und der mindestens eine Arm 220, 220' ist am Verbindungsmittel 14 oder Bolzen 23 befestigt. Hier sind die Arme 220, 220' und damit der Steuerring 22 mittels einer Schelle 221 angeschraubt, es sind aber auch andere elektrisch leitende Befestigungsmöglichkeiten wie Pressen oder Schweissen möglich. Ein Teil der Leiterseilüberbrückungsvorrichtung L bzw. die Isolationsschicht 19 ist konzentrisch durch den Steuerring 22 geführt, wobei der Steuerring 22 nicht direkt mit dem Schutzmantel 20 in Kontakt kommt, sondern beabstandet ist.

Der Steuerring 22 ist torusartig ausgeführt und kann geschlossen oder geringfügig entlang seines Umfangs geöffnet ausgestaltet sein. Der Steuerringradius R muss derart ausgestaltet sein, dass der Steuerring 22 von der Leiterseilvorrichtung L beabstandet ist. Als Dicke d des Steuerrings 22 sollten bevorzugt Grössen zwischen 10 mm und 50 mm und mehr vorgesehen sein. Der Ringradius R des Steuerrings sollte zwischen 80 mm und maximal 300 mm liegen. Um scharfe Kanten am Steuerring 22 zu vermeiden, an welchen hohe elektrische Feldstärken herrschen, sollte eine Torusform des Steuerrings 22 mit kreisförmigem Querschnitt entlang des Umfangs geformt sein, wobei der Steuerring 22 voll oder als Rohr ausgestaltet sein kann. Der Steuerring 22 kann entlang seines Umfangs eine Öffnung aufweisen, wobei eine solche Öffnung im befestigten Zustand nach oben in Richtung der Mastspitze des Mastes 1 orientiert angeordnet sein soll.

Um Überschläge bei Wartungsarbeiten am Leiterseil 7, Freileitungsmast 1 oder Leiterseilüberbrückungsvorrichtung L zu vermeiden und damit die Wartungsarbeiten zusätzlich zu sichern, ist eine Erdungsvorrichtung 24 beabstandet von der Leiterseilüberbrückungsvorrichtung L am isolatorfreien Leiterseil 7 angeordnet. An dieser Erdungsvorrichtung 24 kann eine Erdungsstange einfach befestigt werden, nachdem die Hochspannung abgeschaltet wurde und somit das Leiterseil 7 geerdet werden.

### Bezugszeichenliste

- 1: Freileitungsmast/Betonmast
- 2, 3, 4: Leiterseilausleger
- s1 bis s8: Schlagweite
- 5: Lichtbogenschutzarmatur
- 6: Hochspannungsisolatoren l Fadenmass
- 7: Leiterseil
- 8: Erdseil/Blitzschutzseil

- L: Leiterseilüberbrückungsvorrichtung
- 10: zentraler Hochspannungsisolator
- l1: Fadenmass des zentralen Hochspannungsisolators
- 11, 11': Seitenisolatoren
- l2: Fadenmass der Seitenisolatoren
- 12: Verbindungsstück
- 13: Umlenk- und Befestigungsmittel
- 14: Verbindungsmittel
- 14': Klemme
- 15, 15: `Leiterschlaufe
- 16, 16', 16": Isolatorkörper
- l3: Länge des Isolatorkörpers
- 18: Leitschicht (schwach leitender Kunststoff)
- 19: Isolationsschicht (Hochspannungsfester Isolierstoff, XLPE)
- 20: Schutzmantel (PE)
- 21: Endkappe
- 22: Steuerring
- 220, 220': Haltearm
- 221: Schelle
- d: Dicke des Steuerrings
- R: Ringradius des Steuerrings
- 23: Bolzen
- 24: Erdungsvorrichtung
- S, S': Schraubverbindung

## Patentansprüche

1. Leiterseilüberbrückungsvorrichtung (L) zur elektrisch isolierten Vorbeiführung eines Leiterseils (7) einer Freileitung an einem Leiterseilausleger (2, 3, 4) eines Freileitungsmastes (1), wobei die Leiterseilüberbrückungsvorrichtung (L) mindestens eine Leiterschlaufe (15, 15') und einen Isolatorkörper (16, 16', 16") aufweist, der die beidseitig jeweils an einem Ende des Leiterseils (7) die Enden des Leiterseils (7) elektrisch verbindende und den Leiterseilausleger (2, 3, 4) überbrückend anordenbare Leiterschlaufe (15, 15') umschliesst,
**dadurch gekennzeichnet, dass**
der Isolatorkörper (16, 16', 16") mehrlagig ist, mindestens eine direkt auf der Oberfläche der Leiterschlaufe (15, 15') aufliegende Leitschicht (18), eine die Leitschicht (18) umschliessende Isolationsschicht (19) und einen die Isolationsschicht (19) umschliessenden Schutzmantel (20) umfasst, und
dass die Leiterseilüberbrückungsvorrichtung (L) mindestens zwei Steuerringe (22) umfasst, welche an beiden Enden der Leiterseilüberbrückungsvorrichtung (L) elektrisch leitend mit der Leiterschlaufe (15, 15') verbunden anordenbar sind.

2. Leiterseilüberbrückungsvorrichtung (L) nach Anspruch 1, wobei die Leitschicht (18) aus einem schwach leitenden Kunststoff gebildet ist, welcher einen spezifischen Gleichstromwiderstand von 25 bis 100 Ohmcm bei 23 °C aufweist.

3. Leiterseilüberbrückungsvorrichtung (L) nach Anspruch 1 oder 2, wobei die Leitschicht (18) eine Schichtdicke von 0,1 bis 2 Millimetern aufweist.

4. Leiterseilüberbrückungsvorrichtung (L) nach einem der Ansprüche 1 bis 3, wobei beidseitig an der Leiterschlaufe (15, 15') endständig jeweils ein Bolzen (23) an den Enden der Leiterschlaufe (15, 15') befestigt ist, welcher in einer Klemme (14') als Verbindungsmittel (14) und Teil der Leiterseilüberbrückungsvorrichtung (L) elektrisch leitend mechanisch gehalten lagerbar ist.

5. Leiterseilüberbrückungsvorrichtung (L) nach Anspruch 4, wobei ein Aufnahmeteil des Bolzens (23) jeweils ein Ende der Leiterschlaufe (15, 15') mit umgebendem Isolatorkörper (16, 16', 16") umschliessend hält.

6. Leiterseilüberbrückungsvorrichtung (L) nach Anspruch 4 oder 5, wobei an der Klemme (14') eine zweite Aufnahme zur Befestigung des Leiterseils (7) ausgespart ist.

7. Leiterseilüberbrückungsvorrichtung (L) nach einem der Ansprüche 4 bis 6, wobei die Befestigung des Bolzens (23) im ersten Abschnitt der Klemme (14') und/oder des Leiterseils (7) in der zweiten Aufnahme der Klemme (14') jeweils durch mindestens eine Schraubverbindung (S, S') erreicht ist.

8. Leiterseilüberbrückungsvorrichtung (L) nach Anspruch 7, wobei Isolatorkörper (16, 16', 16") und/oder Bolzen (23) von den Steuerringen (22) mindestens teilweise beabstandet umschlossen werden und die Steuerringe (22) von mindestens einem Arm (220, 220') beabstandet gehalten sind.

9. Leiterseilüberbrückungsvorrichtung (L) nach Anspruch 7 oder 8, wobei jeder Steuerring (22) elektrisch leitend am Bolzen (23) angeschraubt ist.

10. Leiterseilüberbrückungsvorrichtung (L) nach Anspruch 7 oder 8, wobei jeder Steuerring (22) elektrisch leitend an der Klemme (14') angeschraubt ist.

11. Leiterseilüberbrückungsvorrichtung (L) nach einem der Ansprüche 7 bis 10, wobei eine Dicke (d) des Steuerrings (22) zwischen 10 mm und 50 mm gewählt ist.

12. Leiterseilüberbrückungsvorrichtung (L) nach einem der Ansprüche 7 bis 11, wobei ein Ringradius (R) des Steuerrings (22) zwischen 80 mm und maximal 300 mm liegt.

13. Leiterseilüberbrückungsvorrichtung (L) nach einem der Ansprüche 7 bis 12, wobei der Steuerring (22) als teilweise geöffneter Torus mit abgerundeten Kanten ausgestaltet ist.

14. Leiterseilüberbrückungsvorrichtung (L) nach einem der vorhergehenden Ansprüche, wobei die Leiterseilüberbrückungsvorrichtung (L) von einem mehrlagig ausgeführter inneren Isolatorkörper (16, 16') mit einer Länge (l3) und einem zweiten einlagigen Isolatorkörper (16") mit einem Schutzmantel (20) der Länge (l3') gebildet ist, wobei der zweite Isolatorkörper (16") den ersten Isolatorkörper (16, 16') vollständig konzentrisch umhüllt.

15. Verfahren zur Umrüstung von bestehenden bzw. Herstellung von Freileitungsmasten (1) oder Abspannmasten, umfassend die Schritte:
Bereitstellen und Befestigen einer
Leiterseilüberbrückungsvorrichtung (L) an einem Leiterseilausleger (2, 3, 4)
durch beidseitiges Verbinden eines Leiterseils (7) mittels jeweils eines Verbindungsmittels (14) an beiden Enden der Leiterschlaufe (15, 15') der Leiterseilüberbrückungsvorrichtung (L), sodass das Leiterseil (7) elektrisch isoliert und beabstandet vom Leiterseilausleger (2, 3, 4) am Leiterseilausleger (2, 3, 4) vorbeigeführt ist,
**dadurch gekennzeichnet, dass**
die Leiterseilüberbrückungsvorrichtung (L) nach einem der Ansprüche 1 bis 14 ausgeführt wird.

## Claims

1. An overhead line conductor bridging device (L) for electrically insulated guidance of an overhead line conductor (7) of an overhead line past an overhead line conductor boom (2, 3, 4) of an electricity pylon (1), wherein the overhead line conductor bridging device (L) comprises at least one conductor loop (15, 15') and an insulator body (16, 16', 16"), which surrounds the conductor loop (15,15') which is arrangable to, on both sides on each end respectively of the overhead line conductor (7), electrically connect the ends of the overhead line conductor (7) and which is arrangable to bridge the overhead line conductor boom (2,3,4),
**characterised in that**
the insulator body (16,16',16") is multi-layered, comprises at least one conductive layer (18) resting directly on the surface of the conductor loop (15, 15'), comprises an insulating layer (19) surrounding the conductive layer (18), and comprises a protective casing (20) surrounding the insulating layer (19), and
**in that** the overhead line conductor bridging device (L) comprises at least two control rings (22), which are arrangable at both ends of the overhead line conductor bridging device (L) in a manner electrically conductively connected to the conductor loop (15, 15').

2. The overhead line conductor bridging device (L) according to claim 1, wherein the conductive layer (18) is formed of a poorly conductive plastic having a specific direct current resistance of 25 to 100 Ohmcm at 23 °C.

3. The overhead line conductor bridging device (L) according to claim 1 or 2, wherein the conductive layer (18) has a layer thickness of 0.1 to 2 millimetres.

4. The overhead line conductor bridging device (L) according to any one of claims 1 to 3, wherein a bolt (23) is fastened terminally to the ends of the conductor loop (15, 15') on both sides of the conductor loop (15, 15'), which bolt can be mounted in a clamp (14') as a connection means (14) and part of the overhead line conductor bridging device (L) in an electrically conductive mechanically held manner.

5. The overhead line conductor bridging device (L) according to claim 4, wherein a receiving part of the bolt (23) holds an end of the conductor loop (15, 15') with encompassing insulator body (16, 16', 16") in a manner surrounding said conductor loop end.

6. The overhead line conductor bridging device (L) according to claim 4 or 5, wherein a second receptacle for fastening the overhead line conductor (7) is recessed on the clamp (14').

7. The overhead line conductor bridging device (L) according to any one of claims 4 to 6, wherein the fastening of the bolt (23) in the first portion of the clamp (14') and/or of the overhead line conductor (7) in the second receptacle of the clamp (14') is achieved in each case by at least one screw connection (S, S').

8. The overhead line conductor bridging device (L) according to claim 7, wherein insulator bodies (16, 16', 16") and/or bolts (23) are surrounded in an at least partially spaced-apart manner by the control rings (22), and the control rings (22) are held spaced-apart by at least one arm (220, 220').

9. The overhead line conductor bridging device (L) according to claim 7 or 8, wherein each control ring (22) is screwed to the bolt (23) in an electrically conductive manner.

10. The overhead line conductor bridging device (L) according to claim 7 or 8, wherein each control ring (22) is screwed to the clamp (14') in an electrically conductive manner.

11. The overhead line conductor bridging device (L) according to any one of claims 7 to 10, wherein a thickness (d) of the control ring (22) is selected between 10 mm and 50 mm.

12. The overhead line conductor bridging device (L) according to any one of claims 7 to 11, wherein a ring radius (R) of the control ring (22) is between 80 mm and at most 300 mm.

13. The overhead line conductor bridging device (L) according to any one of claims 7 to 12, wherein the control ring (22) is designed as a partially opened torus with rounded edges.

14. The overhead line conductor bridging device (L) according to any one of the preceding claims, wherein the overhead line conductor bridging device (L) is formed by a multi-layered inner insulator body (16, 16') having a length (13) and a second single-layered insulator body (16") having a protective casing (20) of length (l3'), said second insulator body (16") completely concentrically encasing said first insulator body (16, 16').

15. A method for retrofitting existing, or producing electricity pylons (1) or anchor pylons, comprising the steps:
providing and fastening an overhead line conductor bridging device (L) to an overhead line conductor boom (2, 3, 4) by connecting an overhead line conductor (7) on both sides by means of respective connection means (14) at both ends of the conductor loop (15, 15') of the overhead line conductor bridging device (L) so that the overhead line conductor (7) is guided past the overhead line conductor boom (2, 3, 4) in an electrically insulated manner and at a distance from the overhead line conductor boom (2, 3, 4),
**characterised in that**
the overhead line conductor bridging device is embodied according to one of claims 1 to 14.

## Revendications

1. Dispositif de pontage de câble conducteur (L) pour le passage électriquement isolé d'un câble conducteur (7) d'une ligne aérienne sur un bras de support de câble conducteur (2, 3, 4) d'un pylône pour lignes aériennes (1), sachant que le dispositif de pontage de câble conducteur (L) comporte au moins une boucle conductrice (15, 15') et un corps isolant (16, 16', 16"), qui entoure la boucle conductrice (15, 15') pouvant être disposée des deux côtés respectivement à une extrémité du câble conducteur (7) de manière à relier électriquement les extrémités du câble conducteur ((7) et à ponter le bras de support de câble conducteur (2, 3, 4)
**caractérisé en ce que**
le corps isolant (16, 16', 16") est à couches multiples, comprend au moins une couche conductrice (18) reposant directement sur la surface de la boucle conductrice (15, 15'), une couche isolante (19) entourant la couche conductrice (18) et une gaine protectrice (20) entourant la couche isolante (19), et
**en ce que** le dispositif de pontage de câble conducteur (L) comprend au moins deux bagues de commande (22), lesquelles peuvent être disposées aux deux extrémités du dispositif de pontage de câble conducteur (L) reliées de façon électroconductrice à la boucle conductrice (15, 15').

2. Dispositif de pontage de câble conducteur (L) selon la revendication 1, sachant que la couche conductrice (18) est formée d'une matière plastique faiblement conductrice, laquelle comporte une résistance au courant continu spécifique de 25 à 100 Ohmcm à 23°C.

3. Dispositif de pontage de câble conducteur (L) selon la revendication 1 ou 2, sachant que la couche conductrice (18) comporte une épaisseur de couche de 0,1 à 2 millimètres.

4. Dispositif de pontage de câble conducteur (L) selon l'une quelconque des revendications 1 à 3, sachant que des deux côtés sur la boucle conductrice (15, 15') est fixé en bout un axe (23) respectivement aux extrémités de la boucle conductrice (15, 15'), lequel peut être logé maintenu mécaniquement de façon électroconductrice dans une pince (14') en tant que moyen de liaison (14) et partie du dispositif de pontage de câble conducteur (L) .

5. Dispositif de pontage de câble conducteur (L) selon la revendication 4, sachant qu'une partie de logement de l'axe (23) maintient respectivement de façon enveloppante une extrémité de la boucle conductrice (15, 15') avec un corps isolant entourant (16, 16', 16").

6. Dispositif de pontage de câble conducteur (L) selon la revendication 4 ou 5, sachant qu'un deuxième logement est aménagé sur la pince (14') pour la fixation du câble conducteur (7).

7. Dispositif de pontage de câble conducteur (L) selon l'une quelconque des revendications 4 à 6, sachant que la fixation de l'axe (23) est réalisée dans la première section de la pince (14') et/ou du câble conducteur (7) dans le deuxième logement de la pince (14') respectivement par au moins une liaison par vissage (S, S').

8. Dispositif de pontage de câble conducteur (L) selon la revendication 7, sachant que le corps isolant (16, 16', 16") et/ou l'axe (23) sont entourés au moins en partie à distance par les bagues de commande (22) et les bagues de commande (22) sont maintenues à distance d'au moins un bras (220, 220').

9. Dispositif de pontage de câble conducteur (L) selon la revendication 7 ou 8, sachant que chaque bague de commande (22) est vissée de manière électroconductrice à l'axe (23).

10. Dispositif de pontage de câble conducteur (L) selon la revendication 7 ou 8, sachant que chaque bague de commande (22) est vissée de manière électroconductrice à la pince (14').

11. Dispositif de pontage de câble conducteur (L) selon l'une quelconque des revendications 7 à 10, sachant qu'une épaisseur (d) de la bague de commande (22) est choisie entre 10 mm et 50 mm.

12. Dispositif de pontage de câble conducteur (L) selon l'une quelconque des revendications 7 à 11, sachant qu'un rayon annulaire (R) de la bague de commande (22) se situe entre 80 mm et un maximum de 300 mm.

13. Dispositif de pontage de câble conducteur (L) selon l'une quelconque des revendications 7 à 12, sachant que la bague de commande (22) est structurée sous la forme d'un tore partiellement ouvert avec des bords arrondis.

14. Dispositif de pontage de câble conducteur (L) selon l'une quelconque des revendications précédentes, sachant que le dispositif de pontage de câble conducteur (L) est formé par un corps isolant (16, 16') intérieur réalisé à couches multiples avec une longueur (13) et un deuxième corps isolant (16'') monocouche avec une gaine protectrice (20) de longueur (13'), sachant que le deuxième corps isolant (16'') enveloppe complètement de façon concentrique le premier corps isolant (16, 16').

15. Procédé d'adaptation de pylônes de lignes électriques aériennes (1) ou de pylônes haubanés existants ou fabrication de ceux-ci, comprenant les étapes suivantes :
préparation et fixation d'un dispositif de pontage de câble conducteur (L) à
un bras de support de câble conducteur (2, 3, 4)
par liaison bilatérale d'un câble conducteur (7) au moyen respectivement d'un moyen de liaison (14) aux deux extrémités de la boucle conductrice (15, 15') du dispositif de pontage de câble conducteur (L) de telle manière que le câble conducteur (7) est électriquement isolé et est passé sur le bras de support de câble conducteur (2, 3, 4) à distance du bras de support de câble conducteur (2, 3, 4),
**caractérisé en ce que**
le dispositif de pontage de câble conducteur (L) est exécuté selon l'une quelconque des revendications 1 à 14.
